# FASCICULE DE BREVET EUROPEEN

(11) **EP 0 627 334 B1**
(45) Date de publication et mention de la délivrance du brevet: **30.07.1997**
(21) Numéro de dépôt: 94400995.0
(22) Date de dépôt: 06.05.1994
(51) Int. Cl.: B60J 10/08

(54) **Joint, notamment pour porte de véhicule automobile, dispositif d'étanchéité et procédé de montage**
Profil, insbesondere für Kraftfahrzeugtür, Dichtungsvorrichtung und Verfahren zur Montage
Profile, especially for vehicle door, sealing device and fabric method for mounting

(30) Priorité: 25.05.1993 FR 9306190
(43) Date de publication de la demande: 07.12.1994
(73) Titulaire: HUTCHINSON, F-75008 Paris (FR)
(72) Inventeur: Guillon, Henri, F-45700 Villemandeur (FR); Planché, Pierre, F-45490 Treilles (FR)
(74) Mandataire: Orès, Bernard

(56) Documents cités:
- EP-A- 0 490 733
- FR-A- 2 633 659

## Description

La présente invention se rapporte principalement à un joint, notamment pour porte de véhicule automobile, à un dispositif d'étanchéité comportant un tel joint et à un procédé de montage d'un tel joint.

Le confort d'un véhicule automobile est très fortement influencé par la qualité de l'isolation (isolation phonique et étanchéité) assurée notamment par les joints de portes. Il est donc primordial d'assurer le maintien sur le cadre de porte du joint d'étanchéité pendant toute la durée de vie du véhicule pouvant atteindre et même dépasser 15 ans.

On a ainsi été amené à adopter des systèmes de fixation de joints pour portes de véhicules automobiles nécessitant un temps de montage important. De plus, le démontage éventuel de tels joints de portes, par exemple lors de la réparation d'un véhicule, est également une opération longue et par suite, coûteuse.

C'est par conséquent un but de la présente invention d'offrir un joint notamment pour porte de véhicule automobile permettant une fixation sûre et d'une grande longévité.

C'est également un but de la présente invention d'offrir un tel joint permettant un montage rapide.

C'est aussi un but de la présente invention d'offrir un tel joint permettant un démontage rapide.

Ces buts sont atteints par un joint comportant une base élastique présentant des évidements de réception des montants d'appui et de basculement d'un caisson de réception de la base du joint et des moyens d'appui sur le fond dudit caisson. Le caisson de réception adapté comporte une ouverture allongée dont la largeur entre les montants est inférieure à la largeur de la base du joint selon l'invention mesurée au niveau des évidements de réception dudit montant. Ainsi, le basculement des éléments de la base du joint au niveau des évidements permet un encliquetage du joint dans le caisson.

L'invention a principalement pour objet un joint, notamment pour porte de véhicule automobile comportant une base de fixation et un élément d'étanchéité, caractérisé en ce que la base de fixation comporte des bras susceptibles de basculer autour d'un point de basculement O entre les points d'appui A, B des bras lorsque ceux-ci sont montés sur des montants placés en vis-à-vis d'un profilé ou caisson de réception définissant une ouverture allongée, pour assurer la fixation par encliquetage du joint dans le profilé ou le caisson de réception et en ce que la distance AB entre les points d'appui du basculement correspondant à la largeur CD de l'ouverture du caisson du montage est inférieure la somme AO + OB des distances entre chaque point d'appui A, B et le point de basculement O.

Selon divers modes de réalisation de l'invention:
- le joint est symétrique par rapport à un plan et en la base de fixation comporte deux bras disposés symétriquement par rapport audit plan, chaque bras comportant un évidement de réception d'un montant d'appui et de basculement du bras.
- les bras sont reliés par une mince couche solidarisée avec l'élément d'étanchéité.
- le joint comporte des pieds d'appui, susceptibles de prendre appui sur le fond d'un caisson de réception.
- le joint comporte des pieds d'appui, susceptibles de prendre appui sur des faces latérales d'un caisson de réception.
- la fixation par encliquetage est obtenue par écartement des bras.

L'invention a également pour objet un dispositif d'étanchéité comportant un joint selon l'invention et un profilé ou un caisson de réception de la base de fixation dudit joint, caractérisé en ce que le caisson comporte deux montants placés en vis-à-vis dont les extrémités C,D définissent une ouverture allongée, la largeur CD de ladite ouverture étant inférieure à la largeur EF de la base de fixation du joint dans la condition non montée et à la somme AO + OB des distances entre chaque point d'appui A, B et le point de basculement O.

Selon un mode de réalisation du dispositif selon l'invention, l'élément d'étanchéité du joint assure l'étanchéité en étant comprimé en direction du caisson de réception selon le plan de symétrie du joint.

L'invention a également pour objet un procédé de montage d'un joint selon l'invention, caractérisé en ce qu'il comporte une étape de pénétration des montants du caisson de réception dans les évidements de réception des bras de la base de fixation du joint et une étape de compression dans la direction de l'ouverture CD du caisson de réception jusqu'à l'encliquetage de la base de fixation dans le caisson de réception.

Selon un mode de réalisation du procédé selon l'invention, le passage de la condition non montée à la condition montée du joint s'effectue en écartant les bras de la base de fixation.

L'invention sera mieux comprise au moyen de la description ci-après et des figures annexées données comme des exemples non limitatifs et sur lesquels :
- la figure 1 est une vue en coupe transversale d'un joint selon la présente invention avant montage sur un caisson adapté ;
- la figure 2 est une vue en coupe transversale du joint de la figure 1 en condition montée.

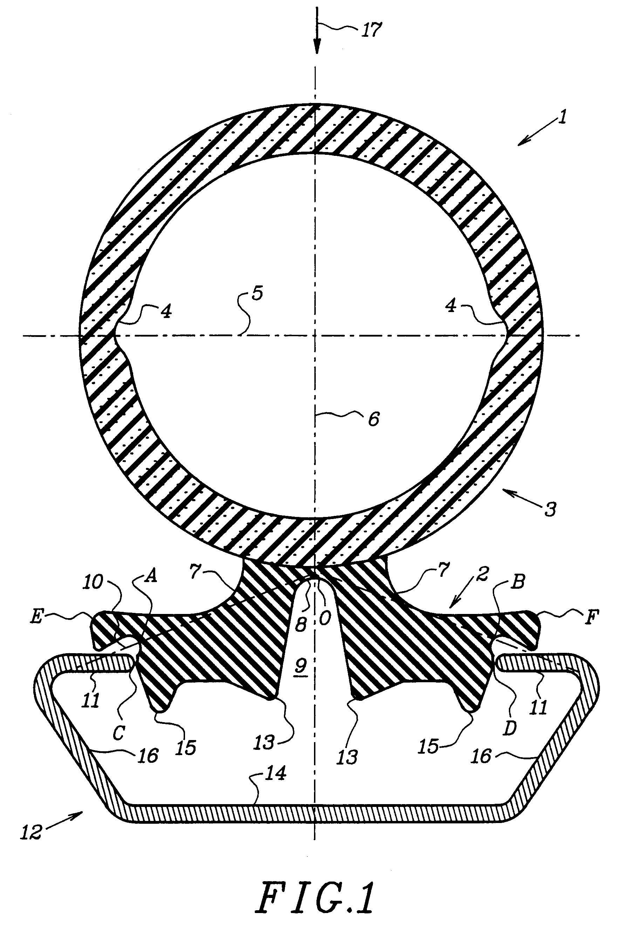

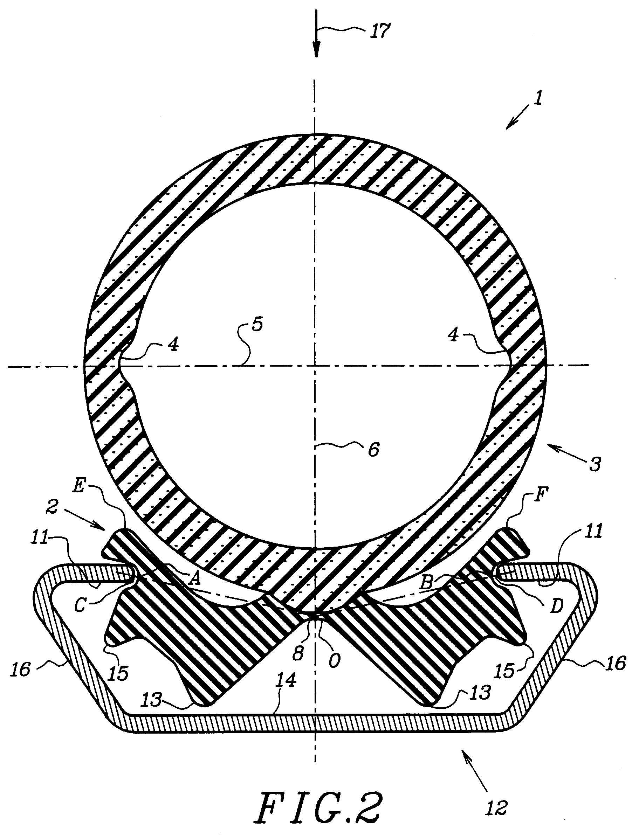

Sur les figures 1 et 2, on a utilisé les mêmes références pour désigner les mêmes éléments.

Le joint 1 selon la présente invention comporte une base 2 et un élément d'étanchéité 3. Dans l'exemple non limitatif illustré, l'élément d'étanchéité 3 comporte un cylindre en caoutchouc cellulaire dont la paroi présente deux zones 4 de plus faible épaisseur disposées en vis-à-vis et formant charnières. Un premier plan de symétrie 5 de l'élément d'étanchéité 3 passe par les zones 4 de plus faible épaisseur. Un deuxième plan de symétrie 6 de l'élément d'étanchéité 3, orthogonal au plan 5, forme un plan de symétrie du joint 1 selon la présente invention. La base 2 comporte deux bras 7 solidarisés à l'élément d'étanchéité 3 et reliés par une mince couche d'élastomère 8 formant le fond d'une cuvette 9 symétrique par rapport au plan 6. Chaque bras 7 comporte un évidement 10 de réception d'un montant 11 d'un caisson 12, assurant un point d'appui permettant le basculement des bras 7 lors de l'encliquetage. Avantageusement, chaque bras 7 comporte un pied d'appui 13 sur le fond 14 du caisson 12. Avantageusement, chaque pied 7 comporte un pied 15 d'appui sur les parois latérales 16 du caisson 12. Sans que cela ne présente un caractère limitatif, le caisson 12 illustré sur les figures 1 et 2 a une forme trapézoïdale.

Les évidements 10 des bras 7 ont une géométrie permettant, en condition non montée, la pénétration des extrémités des montants 11.

L'encliquetage assurant la fixation du joint 1 selon la présente invention est assuré par le basculement des bras 7 en prenant appui sur des extrémités C et D des montants 11. A est un point situé au fond de l'évidement 10 du bras 7 situé à gauche sur les figures, B est un point situé au fond de l'évidement 10 du bras 7 situé à droite sur les figures et O est un point situé sensiblement à la moitié de l'épaisseur de la bande d'élastomère 8 dans le plan 6, C et D sont des points situés aux extrémités des montants 11, le point E est situé à l'extrémité d'un premier bras 7, le point F est situé à l'extrémité du second bras 7. La distance EF correspond à la largeur de la base 2 dans la condition non montée du joint 1. La largeur de l'ouverture du caisson 12, c'est-à-dire la distance entre les points C et D, est inférieure à la somme de la distance entre le point A et le point O et de la distance entre le point O et le point B. La position des segments AO et OB avant et après l'encliquetage est symétrique par rapport à la droite CD.

De même, la largeur CD de l'ouverture du caisson 12 est inférieure à la largeur EF de la base 2 du joint 1 dans la condition non montée.

Avantageusement, le caisson 12 est disposé de telle manière que, pour assurer l'étanchéité, par exemple lors de la fermeture d'une porte, l'élément d'étanchéité 3 travaille en compression, par exemple selon la flèche 17 située dans le plan 6.

Lorsque l'on désire démonter le joint selon la présente invention, par exemple en vue de son remplacement ou pour effectuer une réparation sur le véhicule, il suffit d'assurer une traction dirigée dans le sens inverse de la flèche 17. Une fois la réparation effectuée, le même joint 1 ou, un nouveau joint de remplacement, pourra être aisément fixé par encliquetage dans le caisson 12.

Il est bien entendu que la présente invention n'est pas limitée à la forme du joint décrite, mais s'étend à toutes les formes permettant l'encliquetage d'un joint sur des montants, par exemple d'un caisson.

L'invention n'est pas limitée à la mise en oeuvre de joints en élastomère mais s'étend également aux joints en plastomère ou en mélange d'élastomère et de plastomère.

Il est bien entendu que selon la dureté de l'élastomère employé pour la base 2, les bras 7 subissent certaines déformations. Toutefois, en dehors du basculement assurant l'encliquetage, les bras 7 ont avantageusement la même forme dans la condition avant montage de la figure 1 et dans la condition montée de la figure 2.

L'invention s'applique principalement à l'industrie automobile.

## Revendications

1. Joint, notamment pour porte de véhicule automobile comportant une base de fixation (2) et un élément d'étanchéité (3), caractérisé en ce que la base de fixation (2) comporte des bras (7) susceptibles de basculer autour d'un point de basculement O entre les points d'appui A, B des bras (7) lorsque ceux-ci sont montés sur des montants (11) placés en vis-à-vis d'un profilé ou caisson de réception (12) définissant une ouverture allongée, pour assurer la fixation par encliquetage du joint (1) dans le profilé ou le caisson de réception (12) et en ce que la distance AB entre les points d'appui du basculement correspondant à la largeur CD de l'ouverture du caisson (12) du montage est inférieure la somme AO + OB des distances entre chaque point d'appui A, B et le point de basculement O.

2. Joint selon las revendication 1, caractérisé en ce qu'il est symétrique par rapport à un plan (6) et en ce que la base de fixation (2) comporte deux bras (7) disposés symétriquement par rapport audit plan (6), chaque bras comportant un évidement (10) de réception d'un montant (11) d'appui et de basculement du bras.

3. Joint selon la revendication 1 ou 2, caractérisé en ce que les bras (7) sont reliés par une mince couche (8) solidarisée avec l'élément d'étanchéité (3).

4. Joint selon l'une quelconque des revendications précédentes, caractérisé en ce qu'il comporte des pieds d'appui (13), susceptibles de prendre appui sur le fond (14) d'un caisson de réception (12).

5. Joint selon l'une quelconque des revendications précédentes, caractérisé en ce qu'il comporte des pieds d'appui (15), susceptibles de prendre appui sur des faces latérales (16) d'un caisson de réception (12).

6. Joint selon l'une quelconque des revendications précédentes, caractérisé en ce que la fixation par encliquetage est obtenue par écartement des bras (7).

7. Dispositif d'étanchéité comportant un joint selon l'une quelconque des revendications précédentes et un profilé ou un caisson de réception de la base de fixation (2) dudit joint (1), caractérisé en ce que le caisson comporte deux montants (11) placés en vis-à-vis dont les extrémités C,D définissent une ouverture allongée, la largeur CD de ladite ouverture étant inférieure à la largeur EF de la base de fixation (2) du joint dans la condition non montée et à la somme AO + OB des distances entre chaque point d'appui A, B et le point de basculement O.

8. Dispositif selon la revendication 7, caractérisé en ce que l'élément d'étanchéité (3) du joint (1) assure l'étanchéité en étant comprimé en direction du caisson de réception (12) selon le plan de symétrie (6) du joint (1).

9. Procédé de montage d'un joint selon l'une quelconque des revendications 1 à 6, caractérisé en ce qu'il comporte une étape de pénétration des montants (11) du caisson de réception (12) dans les évidements de réception (10) des bras (7) de la base de fixation (2) du joint (1) et une étape de compression (17) dans la direction de l'ouverture CD du caisson de réception (12) jusqu'à l'encliquetage de la base de fixation (2) dans le caisson de réception (12).

10. Procédé selon la revendication 9, caractérisé en ce que le passage de la condition non montée à la condition montée du joint (1) s'effectue en écartant les bras (7) de la base de fixation (2).

## Claims

1. A seal, particularly for a door of a motor vehicle, comprising of fixing base (2) and a sealing-tight element (3), characterised in that the fixing base (2) comprises arms (7) adapted to rock about a rocking point O between the bearing points A, B of the arms (7) when these latter are mounted on uprights (11) positioned opposite a receiving box section (12) defining an elongated opening, in order to ensure a snap-in fitment of the seal (1) into the profiled member or receiving box section (12) and in that the distance AB between the rocking bearing points corresponding to the width CD of the opening in the box section (12) is less than the sum AO + OB of the distances between each bearing point A, B and the rocking point O.

2. A seal according to Claim 1, characterised in that it is symmetrical in respect of a plane (6) and in that a fixing base (2) comprises two arms (7) disposed symmetrically in relation on the said plane (6), each arm comprising a recess (10) for receiving an upright (11) for supporting and allowing rocking of the arm.

3. A seal according to Claim 1 or 2, characterised in that the arms (7) are joined by a thin layer (8) rigid with the sealing-tight element (3).

4. A seal according to any one of the preceding Claims, characterised in that it comprises bearing feet (13) capable of bearing on the bottom (14) of a receiving box section (12).

5. A seal according to any one of the preceding Claims, characterised in that it comprises bearing feet (15) capable of bearing on lateral faces (16) of a receiving box section (12).

6. A seal according to any one of the preceding Claims, characterised in that the snap-action fitting is achieved by moving the arms (7) apart from each other.

7. A sealing-tight device comprising a seal according to any one of the preceding claims and a profiled or box section for receiving the fixing base (2) of the said seal (1), characterised in that the box section comprises two uprights (11) placed opposite each other, the ends C,D of which define an elongated opening, the width CD of the said opening being less than the width EF of the fixing base (2) of the seal when this is not fitted and to the sum AO + OB of the distances between each bearing point A,B and the rocking point O.

8. A device according to Claim 7, characterised in that the sealing-tight element (3) of the seal (1) ensures sealing-tightness by being compressed in the direction of the receiving box section (12) according to the plane of symmetry (6) of the seal (1).

9. A method of fitting a seal according to any one of Claims 1 to 6, characterised in that it comprises a stage of penetration of the uprights (11) of the receiving box section (12) in the recesses (10) for receiving the arms (7) of the fixing base (2) of the seal (1) and a compression stage (17) in the direction of the opening CD in the receiving box section (12) until the snap-action fitment of the fixing base (2) in the receiving box section (12).

10. A method according to Claim 9, characterised in that the change from the non-fitted condition to the fitted condition of the seal (1) is carried out by moving apart from each other the arms (7) of the fixing base (2).

## Patentansprüche

1. Dichtung, insbesondere für eine Kraftfahrzeugtür, umfassend eine Befestigungsbasis (2) und ein Dichtungselement (3), dadurch **gekennzeichnet,** daß die Befestigungsbasis (2) Arme (7) hat, die dazu geeignet sind, um einen Kippunkt O zwischen den Auflagepunkten A, B der Arme (7) zu kippen, wenn dieselben auf Ständern bzw. Stützen (11), die im Gegenüber eines Profils oder einer Aufnahmekassette (12) plaziert sind, welche eine langgestreckte Öffnung begrenzen, montiert sind, um die Befestigung der Dichtung (1) in dem Profil oder der Aufnahmekassette (12) durch Verklinkung sicherzustellen, und daß der Abstand AB zwischen den Auflagepunkten des Kippens, welcher der Breite CD der Öffnung der Kassette (12) für die Montage entspricht, kleiner als die Summe AO + OB der Abstände zwischen jedem Auflagepunkt A, B und dem Kippunkt O ist.

2. Dichtung gemäß Anspruch 1, dadurch **gekennzeichnet,** daß sie bezüglich einer Ebene (6) symmetrisch ist und daß die Befestigungsbasis (2) zwei Arme (7) hat, welche symmetrisch mit Bezug auf die genannte Ebene (6) angeordnet sind, wobei jeder Arm eine Aussparung (10) für die Aufnahme eines Ständers bzw. einer Stütze (11) für die Auflage und das Kippen des Arms hat.

3. Dichtung gemäß Anspruch 1 oder 2, dadurch **gekennzeichnet,** daß die Arme (7) durch eine dünne Schicht (8) verbunden sind, die mit dem Dichtungselement (3) verbunden ist.

4. Dichtung gemäß irgendeinem der vorhergehenden Ansprüche, dadurch **gekennzeichnet,** daß sie Auflagefüße (13) hat, die dazu geeignet sind, in Auflage auf den Boden (14) einer Aufnahmekassette (12) zu kommen.

5. Dichtung gemäß irgendeinem der vorhergehenden Ansprüche, dadurch **gekennzeichnet,** daß sie Auflagefüße (15) hat, die dazu geeignet sind, in Auflage auf die Seitenflächen (16) einer Aufnahmekassette (12) zu kommen.

6. Dichtung gemäß irgendeinem der vorhergehenden Ansprüche, dadurch **gekennzeichnet,** daß die Befestigung durch Verklinkung mittels Ausspreizen der Arme (7) erhalten wird.

7. Dichtungseinrichtung, umfassend eine Dichtung gemäß irgendeinem der vorhergehenden Ansprüche und ein Profil oder eine Aufnahmekassette für die Befestigungsbasis (2) der Dichtung (1), dadurch **gekennzeichnet,** daß die Kassette zwei Ständer bzw. Stützen (11) hat, die gegenüberliegend angeordnet sind, deren äußere Enden C, D eine langgestreckte Öffnung begrenzen, wobei die Breite CD der Öffnung kleiner als die Breite EF der Befestigungsbasis (2) der Dichtung in dem nichtmontierten Zustand und gleich der Summe AO + OB der Entfernungen zwischen jedem Auflagepunkt A, B und dem Kippunkt O ist.

8. Einrichtung gemäß Anspruch 7, dadurch **gekennzeichnet,** daß das Dichtungselement (3) der Dichtung (1) die Dichtheit sicherstellt, indem es in der Richtung der Aufnahmekassette (12) gemäß der Symmetrieebene (6) der Dichtung (1) zusammengedrückt wird.

9. Verfahren zur Montage einer Dichtung gemäß irgendeinem der Ansprüche 1 bis 6, dadurch **gekennzeichnet,** daß es einen Schritt des Eindringens der Ständer bzw. Stützen (11) der Aufnahmekassette (12) in die Aufnahmeaussparungen (10) der Arme (7) der Befestigungsbasis (2) der Dichtung (1) umfaßt, und einen Schritt der Kompression (17) in der Richtung der Öffnung CD der Aufnahmekassette (12) bis zur Verklinkung der Befestigungsbasis (2) in der Aufnahmekassette (12).

10. Verfahren gemäß Anspruch 9, dadurch **gekennzeichnet,** daß der Übergang von dem nichtmontierten Zustand zu dem montierten Zustand der Dichtung (1) dadurch bewirkt wird, daß man die Arme (7) der Befestigungsbasis (2) auseinanderspreizt.
